(19) **Europäisches Patentamt / European Patent Office / Office européen des brevets**

(11) **EP 1 922 385 B1**

(12) # FASCICULE DE BREVET EUROPEEN

(45) Date de publication et mention de la délivrance du brevet:
**12.08.2009 Bulletin 2009/33**

(21) Numéro de dépôt: **06793128.7**

(22) Date de dépôt: **31.08.2006**

(51) Int Cl.:
**C09K 19/02** (2006.01)   **G02F 1/133** (2006.01)
**C09K 19/38** (2006.01)

(86) Numéro de dépôt international:
**PCT/EP2006/065894**

(87) Numéro de publication internationale:
**WO 2007/028767 (15.03.2007 Gazette 2007/11)**

(54) **PROCÉDÉ D'ÉLABORATION D'UN MATÉRIAU À CRISTAUX LIQUIDES RÉFLÉCHISSANT PLUS DE 50% D'UNE LUMIÈRE INCIDENTE NON POLARISÉE**

VERFAHREN ZUR HERSTELLUNG EINES FLÜSSIGKRISTALLMATERIALS, DAS MEHR ALS 50% VON NICHT-POLARISIERTEM AUFLICHT REFLEKTIERT

METHOD OF PRODUCING A LIQUID CRYSTAL MATERIAL THAT REFLECTS MORE THAN 50% OF NON-POLARISED INCIDENT LIGHT

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **08.09.2005 FR 0509157**

(43) Date de publication de la demande:
**21.05.2008 Bulletin 2008/21**

(73) Titulaire: **CENTRE NATIONAL DE LA RECHERCHE SCIENTIFIQUE (CNRS)**
**75016 Paris (FR)**

(72) Inventeurs:
• **MITOV, Michel**
  **F-31000 Toulouse (FR)**

• **DESSAUD, Nathalie**
  **NL-5655 Eindhoven (NL)**

(74) Mandataire: **Tetaz, Franck Claude Edouard et al**
**Cabinet Régimbeau**
**20, rue de Chazelles**
**75847 Paris Cedex 17 (FR)**

(56) Documents cités:
| | |
|---|---|
| EP-A- 0 982 605 | EP-A- 1 249 483 |
| EP-A2- 1 295 929 | WO-A- 98/57223 |
| GB-A- 2 355 720 | US-A- 6 010 643 |
| US-A1- 2003 104 144 | US-A1- 2004 011 994 |

## Description

DOMAINE DE L'INVENTION

La présente invention concerne le domaine des cristaux liquides, et plus particulièrement des matériaux à cristaux liquides aptes à réfléchir une lumière incidente.

ETAT DE LA TECHNIQUE

Les matériaux à base de cristaux liquides sont aujourd'hui de plus en plus utilisés du fait de leurs propriétés optiques qui permettent de maîtriser des ondes lumineuses visibles et invisibles (infrarouge IR et ultraviolet UV).

Des matériaux à base de cristaux liquides cholestériques ont notamment été développés, ces derniers présentant en effet des propriétés optiques différentes dès cristaux liquides nématiques, de par l'existence de leur structure en hélice. Cette organisation en hélice permet aux cristaux liquides cholestériques de réfléchir sélectivement la lumière avec une longueur d'onde associée $\lambda_R$ reliée au pas p de la structure en hélice par la relation (en incidence normale) :

$$\lambda_R = n.p$$

où n est l'indice de réfraction moyen du cristal liquide cholestérique ($n=(n_e+n_o)/2$ avec ne et $n_o$ les indices optiques extraordinaire et ordinaire). La largeur $\Delta_\lambda$ de la bande de réflexion est reliée à $\lambda_R$, à n et à la biréfringence $\Delta n=n_e-n_o$ par la relation :

$$\Delta\lambda = \lambda_R.\Delta n/n$$

Comme $(\Delta n)_{max}$ est de l'ordre de 0,3 pour les composés organiques usuels, $\Delta\lambda$ se limitera le plus souvent dans le visible à 100 nm en étant typiquement égal à 50 nm. Ainsi, seule une fraction limitée des rayons peut être réfléchie par un cristal liquide cholestérique usuel.

Même si dans certaines applications, la sélectivité en réflexion dans les matériaux à base de cristaux liquides cholestériques est recherchée, il existe de nombreuses applications pour lesquelles une telle sélectivité est un inconvénient.

En effet, pour moduler efficacement l'énergie (lumière, chaleur) traversant un vitrage constitué d'un matériau à cristaux liquides par exemple, il faut que ce dernier soit apte à réfléchir un nombre important de longueurs d'ondes. Cela permet d'améliorer le bilan thermique de certaines enceintes fermées, telles que celles de bâtiments ou de moyens de transports, et de permettre ainsi des économies d'énergie (en s'affranchissant par exemple de la climatisation).

Outre le domaine des vitrages dits intelligents, des matériaux à cristaux liquides présentant des propriétés de réflexion étendues, non usuelles, trouvent également des applications dans de nombreux autres secteurs tels que les télécommunications (matériaux photoniques réflecteurs), l'optique (lunetterie anti-éblouissement), le domaine thermique (revêtement réflecteur IR), le domaine militaire (furtivité IR), et l'affichage (afficheur réflecteur noir sur blanc sans polariseur).

Des travaux pionniers du groupe Philips ont permis d'élaborer des matériaux à cristaux liquides cholestériques solides permettant de réfléchir de la lumière sur une bande de longueurs d'onde plus large, de l'ordre de 300 nm (cf. D.J. Broer, J. Lub and G.N. Mol, Nature 378, 467 [1995]). Cette augmentation est une conséquence de la structure du matériau à cristaux liquides cholestériques qui présente une hélicité suivant un gradient de pas.

Les documents US 2004/0011994, GB 2 355 720, US 2003/104144, EP 0 982 605 donnent d'autres exemptes de fabrication de matériaux cristaux liquides dans lesquels le pas de l'hélice des cristaux liquides est modifié, cette modification étant figée par polymérisation. D'autres travaux, comme ceux décrit dans WO 98/57223 et EP 1 295 929, ont permis d'élaborer des films à cristaux liquides présentant des zones distinctes caractérisées par des sons d'hélices différents.

Un but de la présente invention est de fournir un matériau à cristaux liquides présentant des propriétés de réflexion étendues et un procédé d'élaboration d'un tel matériau à cristaux liquides.

EXPOSE DE L'INVENTION

A cet effet, on prévoit selon l'invention un procédé d'élaboration d'un matériau à cristaux liquides, caractérisé en ce qu'il comprend les étapes consistant à :

- Appliquer un premier traitement à un mélange de cristaux liquides ayant une structure en hélice comprenant un premier cristal liquide (A) non-photoréactif et un deuxième cristal liquide (B) photoréactif, le premier traitement modifiant un sens de l'hélice du mélange ;
- Appliquer un deuxième traitement au mélange de façon à ce que le deuxième cristal (B) liquide forme un réseau de polymère, le deuxième traitement étant effectué pendant tout ou partie de la durée du premier traitement de façon à ce que le matériau à cristaux liquides conserve une mémoire des modifications de l'hélice et que le matériau présente dans tout son volume une structure en hélices à la fois droite et gauche.

Des aspects préférés mais non limitatifs du procédé d'élaboration de matériau à cristaux liquides selon l'invention sont les suivants :

- le mélange présente un polymorphisme comprenant au moins une phase cholestérique et/ou smectique C chiral ;

- le premier cristal liquide (A) comprend des premières molécules de cristal liquide (A1) chirales ;
- le premier cristal liquide (A) comprend en outre des deuxièmes molécules de cristal liquide (A2) de manière à ce que la phase cholestérique et/ou smectique C chirale du mélange présente une inversion du sens de l'hélice de part et d'autre d'une température critique ($T_C$) ;
- le premier cristal liquide (A) peut être à anisotropie diélectrique positive, ou changer de signe d'anisotropie diélectrique en fonction de la fréquence auquel cas le premier cristal liquide (A) comprend en outre des troisièmes molécules de cristal liquide (A3) ;
- le deuxième cristal liquide (B) est dans une concentration inférieure ou égale à 5% du mélange ;
- le deuxième cristal liquide (B) est dans une concentration supérieure à 50% du mélange, et préférentiellement dans une concentration supérieure à 80% du mélange ;
- le deuxième cristal liquide (B) est apte à être activé par irradiation UV;
- le mélange comprend en outre un agent photo-initiateur (C) pour favoriser la formation du réseau de polymère sous irradiation UV ;
- le mélange comprend en outre un agent dispersant (D) pour favoriser une dispersion des composants du mélange et modifier une dynamique du matériau à cristaux liquides lors d'un adressage électrique ;
- le mélange comprend en outre un inhibiteur de polymérisation thermique (E) ;
- le mélange comprend en outre un agent absorbant (F) apte à absorber le rayonnement UV de façon à ce que le matériau à cristaux liquides ait un gradient de structure et/ou de fonction ;
- le deuxième traitement est une irradiation UV apte à polymériser le mélange, cette irradiation UV pouvant être effectuée avec un rayonnement UV ayant une longueur d'onde de 365 nm et une puissance de 0,1 mW/cm$^2$ pendant un temps d'exposition compris entre 30 et 60 minutes ; il permet une réticulation du mélange ou une gélification du mélange ;
- le deuxième traitement peut être une trempe apte à vitrifier le mélange ;
- le premier traitement peut être un traitement thermique, et être soit continu et consister à appliquer une rampe de température au mélange, soit discontinu et consister à porter le mélange à une température de traitement différente de la température critique (TC), la température de traitement étant supérieure à la température critique (TC) lorsqu'une température de fonctionnement du matériau à cristaux liquides est inférieure à la température critique ($T_C$), et inversement, ou consister à porter le mélange à une pluralité de températures de part et d'autre de la température critique ($T_C$) ;
- le premier traitement peut être une irradiation UV , auquel cas le premier cristal liquide (A) comprend en outre des quatrièmes molécules de cristal liquide (A4) permettant une inversion du sens de l'hélice de la phase cholestérique et/ou smectique C chirale en fonction de l'irradiation UV ; l'irradiation UV peut être effectuée avec un rayonnement UV ayant une longueur d'onde comprise entre 285 et 410 nm et une puissance de 0,1 mW/cm$^2$, pendant un temps d'exposition compris entre 1 et 3600 secondes (de préférence entre 60 et 600 secondes) ;

- le premier traitement peut consister à appliquer un champ électrique ou un champ magnétique ;
- le procédé d'élaboration comprend en outre une étape consistant à appliquer au mélange un troisième traitement modifiant un pas de l'hélice du mélange, ce deuxième traitement pouvant être effectué pendant tout ou partie de la durée du troisième traitement ;
- le troisième traitement peut consister à appliquer un champ électrique au mélange, par exemple avec une fréquence de 1 kHz et variant de 0,5 à 20 V/$\mu$m ;
- le troisième traitement peut consister à appliquer un champ magnétique au mélange, par exemple variant de 2 à 15 kG ;
- le troisième traitement peut consister à appliquer une pression mécanique sur le mélange ;
- le troisième traitement peut être une irradiation électromagnétique, auquel cas le premier cristal liquide comprend en outre des cinquièmes molécules (A5) de cristal liquide afin que le troisième traitement modifie la conformation moléculaire du mélange ;
- cette irradiation électromagnétique peut être effectuée par un rayonnement UV ayant une longueur d'onde comprise entre 250 et 365 nm, une énergie comprise entre 1 et 100 mJ/cm$^2$, et pendant un temps d'exposition compris entre 1 et 3600 secondes, de préférence entre 60 et 600 secondes ;
- cette irradiation électromagnétique peut être effectuée par un rayonnement visible ayant une longueur d'onde supérieure à 435 nm, une énergie comprise entre 1 et 100 mJ/cm$^2$, et pendant un temps d'exposition compris entre 1 et 3600 secondes, de préférence entre 60 et 600 secondes ;
- avant d'appliquer l'un quelconque des traitements, le mélange est introduit dans une cellule capacitive comprenant deux substrats recouverts d'un film conducteur.

On prévoit en outre selon l'invention un dispositif à cristaux liquides comprenant un substrat sur lequel est disposé un matériau à cristaux liquides constitué par au moins un cristal liquide présentant une structure en hélice, caractérisé en ce que le matériau présente dans tout son volume une structure en hélices à la fois droite et gauche de sorte que le dispositif comprenne un taux de réflexion supérieur à 50%.

Selon des aspects préférés mais non limitatifs, le dispositif à cristaux liquides comprend des propriétés optiques aptes à être commandées par application d'une tension électrique. Il peut en outre comprendre un autre substrat recouvrant le matériau à cristaux liquides, de façon à former une cellule capacitive.

DESCRIPTION DES FIGURES

D'autres caractéristiques et avantages de l'invention ressortiront encore de la description qui suit, laquelle est purement illustrative et non limitative et doit être lue en regard des dessins annexés, sur lesquels :

- la figure 1 est une représentation schématique d'une cellule contenant le matériau à cristaux liquides selon l'invention ;
- la figure 2 est un graphique mettant en évidence la modification du spectre de lumière transmise par un matériau à cristaux liquides élaboré selon l'invention.

DESCRIPTION DETAILLEE DE L'INVENTION

Un cristal liquide cholestérique étant un cristal liquide de type nématique chiral, les molécules de cristal liquide le composant forment une structure en hélice h de pas p. Comme on l'a rappelé plus haut, cette organisation en hélice permet à un cristal liquide cholestérique de réfléchir sélectivement la lumière (réflexions de Bragg) avec une longueur d'onde associée $\lambda_R$ qui dépend du pas p de la structure en hélice et de l'indice de réfraction moyen n.

Outre la limite de réflexion due à la sélectivité en longueur d'onde, le taux de réflexion sur un matériau à cristal liquide cholestérique, pour une lumière incidente non polarisée, sera toujours limité à 50% au maximum.

En effet, une onde polarisée linéairement peut se décomposer comme la somme d'une onde polarisée circulaire gauche et d'une onde polarisée circulaire droite. Or le sens de l'hélice, qui peut être soit droite soit gauche, implique que seule une des deux composantes, circulaire droite ou circulaire gauche, d'une onde polarisée linéairement peut être réfléchie par un cristal liquide cholestérique. Cette règle de sélectivité en polarisation constitue donc une limite supplémentaire, concernant cette fois la quantité de lumière réfléchie par un cristal liquide cholestérique.

Le matériau à cristaux liquides selon l'invention est élaboré de manière à ce que le taux de réflexion d'une onde se réfléchissant sur ledit matériau à cristaux liquides dépasse cette limite de 50%.

Le milieu de départ permettant d'élaborer ce matériau à cristaux liquides est un mélange qui possède une structure en hélice de par sa composition.

Ce mélange comporte en effet un premier cristal liquide (A) non-photoréactif et un deuxième cristal liquide (B) photoréactif. De manière générale, on prendra un premier cristal liquide (A) chiral. Néanmoins, dans le cas où le premier cristal liquide (A) n'est pas chiral, on choisira un deuxième cristal liquide (B) chiral, de sorte que le mélange des premier et deuxième cristaux liquides (A et B) confère au mélange une structure en hélice.

Le premier cristal liquide (A) non-photoréactif, qui peut être de faible masse molaire ou être un polymère, peut être constitué de molécules identiques ou d'un mélange de plusieurs molécules. Ce premier cristal liquide (A) pourra être choisi dans la famille des cyanobiphényls ou cyanoterphényls et esters reliés.

Une fraction du premier cristal liquide (A) pourra comprendre par exemple les composés E7, BL001, E44 ou E63 de Merck Ltd. ou ROTN-570, TNO623 ou TN10427 de Hoffman-La Roche.

En outre, le premier cristal liquide (A) comprend, en tout ou en partie, des molécules de cristal liquide chirales (A1). Du fait de ces molécules chirales, le mélange présente un polymorphisme qui comprend au moins une phase cholestérique (aussi appelée nématique chirale) et/ou une phase smectique C chirale. Ces molécules de cristal liquides (A1) sont généralement prises non photoréactives.

Ces premières molécules (A1) pourront par exemple être choisies dans la famille des cyanobiphényls ou cyanoterphényls et esters reliés. On pourra notamment choisir un composé dans la famille des Licrilite™ (Merck Ltd.) tels que BL094 ou BL095 ou parmi les composés suivants: C15, CB15, ZLI-4571, ZLI-4572 (Merck Ltd.)

Le premier cristal liquide comprend en outre des deuxièmes molécules de cristal liquide (A2) qui permettent à la phase cholestérique (ou smectique C chirale) du mélange de présenter une inversion du sens de l'hélice h de part et d'autre d'une température critique ($T_C$).

Les deuxièmes molécules de cristal liquide (A2) pourront par exemple être choisies parmi les composés suivants :

- diesters de (S)-1,2-propanediol, diesters de (R,R)-2,3-butanediol (Heppke et al., Z. Naturforsch. 42a, 279-283, 1987) ;
- (S,S)-EPHDBPE, c'est-à-dire : 4-[(S,S)-2,3-epoxyhexyloxy]-phenyl-4-(decyloxy)-benzoate (Sigma-Aldrich) ;
- (S, RSrac)-M96 (Dierking et al., Z. Naturforsch. 49a, 1081-1086, 1994; Dierking et al., Liq. Cryst., 18, 443-449, 1995) ;
- 18,19,21,27-tetranorcholesteryl anisoate (Stegemeyer et al., Z. Naturforsch., A Phys. Sci., 44, 1127, 1989) ;
- (S)-2-chloropropyl 4'-(4-n-nonyloxyphenylpropiolyloxy)biphenyl-4-carboxylate (Slaney et al., J. Mater. Chem., 2, 805, 1992).

Le premier cristal liquide (A) est à anisotropie diélectrique positive. Il pourra être un cristal liquide dit dual, c'est-à-dire changeant de signe d'anisotropie diélectrique en fonction de la fréquence, s'il comprend des troisièmes molécules de cristal liquide (A3) particulières.

On pourra par exemple choisir ces troisièmes molécules de cristal liquide (A3) parmi les composés suivants :

- 2F-3333 (Rolic Research Ltd.) ;
- 4-pentylphenyl 2-chloro-4-(4-pentyl-benzoyloxy) benzoate ou 4-octylphenyl 2-chloro-4-(4-heptylbenzoyl-oxy) benzoate (Acros Organics N. V.)

Le mélange comprend également un deuxième cristal liquide (B) photoréactif, de façon à rendre le mélange photosensible. En effet, ce deuxième cristal liquide (B) est apte à être activé par rayonnement UV. De préférence, ce deuxième cristal liquide (B) comporte plus d'un groupement fonctionnel, typiquement acrylate ou méthacrylate.

La concentration du deuxième cristal liquide (B) dans le mélange peut varier de 3 à 100%.

Lorsque la concentration en deuxième cristal liquide (B) est minoritaire, typiquement inférieure à 5%, le matériau à cristaux liquides sera, après traitement, adressable par un champ électrique, c'est-à-dire que l'on pourra faire varier ses propriétés optiques en fonction d'un champ électrique appliqué.

Lorsque la concentration en deuxième cristal liquide (B) est majoritaire, c'est à dire supérieur à 50%, mais typiquement entre 80 et 100%, le matériau à cristaux liquides final sera un polymère réticulé. Dans ce cas, le matériau à cristaux liquides pourra constituer un film semi-libre (demeurant sur un substrat rigide ou flexible) ou libre (sans substrat).

Le deuxième cristal liquide (B) est choisi par exemple parmi les composés suivants :

- RM257, RM82 (Merck Ltd.) ;
- BAB, BAB-6, BABB-6, BMBB-6 (L.-C. Chien, Recent Advances in Liquid Crystal Polymers, American Chemical Society Book Series, 1995) ;
- oligomères polyorganosiloxanes photoréticulables tels CLM012CN, CC4039, CC390, CC670, CC680, CC1500 (Wacker Chemie Ltd.; EP0711780B1; US005,641,850A).

De manière préférée, le mélange comprend en outre un photo-initiateur (C) destiné à activer la transformation du deuxième cristal liquide (B) suite à une irradiation UV par exemple. La concentration du photoinitiateur (C) peut varier entre 0.5 et 5,0% du constituant (B).

Ce composant (C) peut être choisi parmi les composés suivants :

- Irgacure 907, Irgacure 651, Darocur 1173 (Ciba-Geigy) ;
- 2,6-di-terbutyl-4-methylphenol (Sigma-Aldrich).

Le mélange pourra en outre comprendre un agent dispersant (D). Cet agent dispersant (D), représentant entre 1 et 30% du mélange, est destiné à favoriser la dispersion des espèces dans le mélange. Lorsque le matériau à cristaux liquides est apte à être adressé par un champ électrique, il permet également d'influencer la dynamique lors de la réorientation moléculaire.

L'agent dispersant (D) pourra par exemple être pris parmi les composés suivants :

- série des Disperbyk-160 (BYK Chemie Ltd.) ;
- Disperon #703 (Kusumoto Kasei Ltd.) ;
- #24000 (ICI Ltd.).

Le mélange pourra également comprendre un inhibiteur de polymérisation thermique (E). Cet inhibiteur de polymérisation thermique (E) est destiné à empêcher une polymérisation par voie thermique du deuxième cristal liquide (B) notamment. Ce composé sera pris dans des proportions comprises entre 0,001 et 5% du composé (B) ; il aura de préférence une concentration comprise entre 0,001 et 1% du composé (B).

Cet inhibiteur de polymérisation thermique (E) sera par exemple choisi parmi les composés suivants : hydroquinone, 2-hydroxybenzophenone ou 4-methoxy-2-hydroxybenzophenone (Sigma-Aldrich).

Enfin, le mélange pourra également comprendre un agent absorbant (F) destiné à absorber le rayonnement UV afin de créer des matériaux à gradient de structure et/ou de fonction. Cet agent absorbant (F) représente typiquement entre 0,5 et 2% du mélange.

L'agent absorbant (F) sera pris par exemple dans la série des Tinuvin (Ciba-Geigy) comme le Tinuvin 1130.

Le mélange de ces différents composants est réalisé de façon homogène par brassage en température. Dans un mode de réalisation préféré, on choisira une température de brassage supérieure à la température de clarification de chacun des composés.

Une autre façon de réaliser le mélange consiste à placer les différents composés dans un tube de verre encapsulé et de soumettre ce tube de verre aux ultrasons, en chauffant ou non.

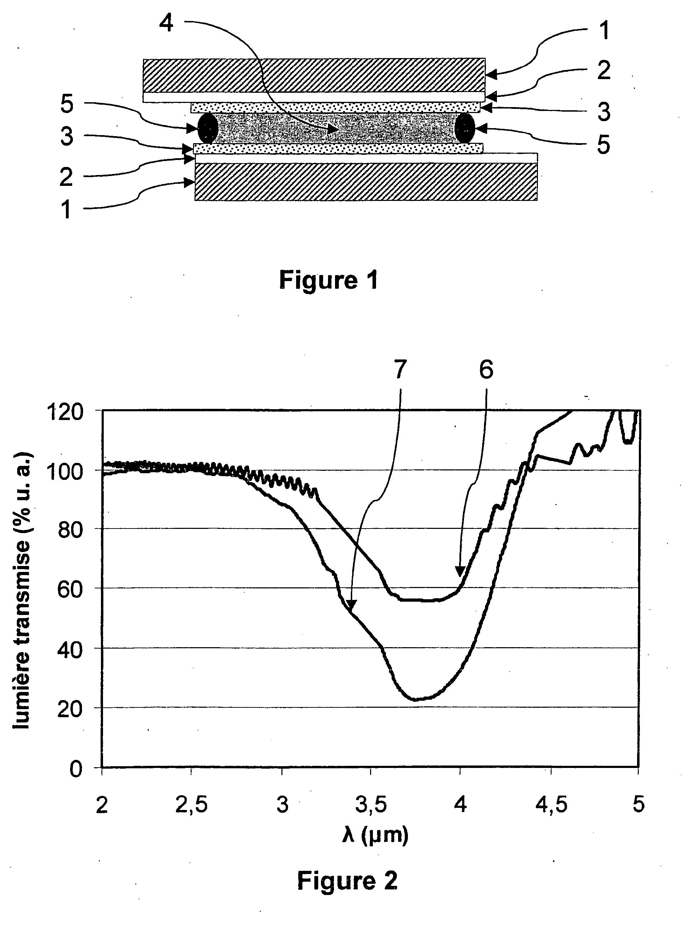

Le mélange pourra être introduit par capillarité dans une cellule capacitive fabriquée suivant le schéma de la figure 1.

Une telle cellule capacitive comprend deux substrats 1, de verre ou de plastique, chacun des substrats 1 étant recouvert d'un film conducteur 2, en ITO (Indium Tin Oxide) par exemple, et d'un film de surfactant 3, polyimide ou alcool polyvinylique (PVA).

Les deux ensembles ainsi formés sont gardés à distance entre 1 et 500 $\mu$m, de préférence entre 10 et 20 $\mu$m, par la présence d'espaceurs 5. On pourra par exemple prendre comme espaceur 5 des billes, ou des fibres en polymère, ou encore un film de plastique d'épaisseur calibrée.

Le mélange de cristaux liquides 4 décrit ci-dessus est ensuite introduit dans l'espace ainsi formé.

La préparation du mélange photosensible et son introduction dans la cellule capacitive sont des étapes réalisées de préférence dans l'obscurité.

Comme on l'a vu plus haut, lorsque la concentration en deuxième cristal liquide (B) est majoritaire, le matériau à cristaux liquides pourra constituer un film semi-libre (demeurant sur un substrat rigide ou flexible) ou libre (sans substrat).

Le mélange étant réalisé (et disposé sur un substrat ou dans une cellule capacitive, ou non), celui-ci doit être traité de façon à ce que le matériau à cristaux liquides résultant possède des performances et propriétés optiques étendues, non usuelles. Le matériau à cristaux liquides résultant sera notamment capable de réfléchir plus de 50% d'une lumière incidente non polarisée.

Une telle transformation des propriétés optiques du mélange passe par l'application de deux traitements, réalisés en tout ou en partie de manière simultanée.

Le premier traitement est destiné à modifier le sens de l'hélice caractéristique du mélange ayant une structure en hélice.

Le mélange présentant, dans sa phase cholestérique et/ou smectique C chirale, un phénomène d'inversion d'hélicité à une température critique $T_C$ (du fait de la présence des molécules de cristal liquide (A2)), le premier traitement pourra par exemple consister à porter le mélange à une température donnée, supérieure à la température critique $T_C$.

Le deuxième traitement a pour but de donner au matériau à cristaux liquides une mémoire des modifications de l'hélice, dues notamment au premier traitement.

Le deuxième traitement pourra par exemple être une irradiation UV réalisée pendant le premier traitement. L'irradiation UV utilisée consiste en un rayonnement UV ayant une longueur d'ondes typiquement de l'ordre de 365 nm, et une puissance de 0,1 mW/cm², avec un temps d'exposition typique compris entre 30 et 60 minutes.

Dans ce cas où le premier traitement consiste à porter le mélange à une seule température, la réaction résultant du deuxième traitement a lieu alors que l'hélice du mélange a un sens différent de celui de l'hélice à la température à laquelle la mesure de l'intensité de la lumière réfléchie par le matériau à cristaux liquides est réalisée (typiquement à température ambiante). Les deux températures, à savoir la température de réaction et la température de mesure de l'intensité réfléchie ou de fonctionnement du matériau à cristaux liquides, correspondent à des structures en hélice du mélange qui avaient, avant réaction, un pas identique mais des sens opposés.

Du fait de ce mode d'élaboration, et notamment du deuxième traitement, découle la formation d'un réseau de polymère dans tout le volume du cristal liquide. Les propriétés orientationnelles du cristal liquide sont fortement influencées par la nature du réseau de polymère : distribution, homogénéité, symétrie, etc.

Comme une conséquence de ce mode d'élaboration, et notamment du fait que les premier et deuxième traitements sont réalisés au moins en partie de manière simultanée, le réseau de polymère formé procure au matériau à cristaux liquides une mémoire des modifications de l'hélice existant pendant sa fabrication, et notamment pendant le premier traitement. Comme le sens de l'hélice définissant la structure détermine la quantité de lumière réfléchie circulairement (50% au maximum), le matériau réfléchit dans ce cas plus de 50% de la lumière incidente non polarisée. En effet, le matériau à cristaux liquides ainsi élaboré présente une structure en hélices à la fois droite et gauche, au moins selon une direction parallèle à la direction de propagation de la lumière. De là découle la propriété nouvelle de non sélectivité en polarisation alors que les matériaux à cristaux liquides habituels présentent la propriété de sélectivité en polarisation. En termes de rendements lumineux et énergétique, il y a un intérêt à ce que les deux sens de polarisation soient présents dans l'onde réfléchie et/ou transmise et ce au sein d'une seule et même onde. Le matériau ayant dans tout son volume une structure en hélices à la fois droite et gauche, c'est à dire au moins dans la direction de propagation de la lumière (en général la direction perpendiculaire au plan du film de matériau), une seule et même onde incidente interagit avec les hélices des deux sens. Il en résulte que l'onde réfléchie est porteuse de deux composantes polarisées circulairement de sens inverses, caractéristique dont découle le dépassement de la limite habituelle de réflexion de 50%.

La figure 2, qui représente le pourcentage de lumière transmise en fonction de la longueur d'onde de cette lumière, permet de comparer la quantité de lumière réfléchie par un matériau à cristaux liquides n'ayant subi aucun des deux traitements (courbe 6) et un matériau à cristaux liquides ayant été réalisé suivant le mode opératoire de l'invention (courbe 7). On constate sur la courbe 6 que, en l'absence de traitement, le matériau à cristaux liquides réfléchi classiquement environ 40% d'un faisceau de lumière non polarisé ayant une longueur d'onde de 3,8 μm, tandis qu'après traitements, la réflexion approche un taux d'environ 80% à la même longueur d'onde (courbe 7).

Le premier traitement consistant à faire varier le sens de l'hélice du mélange peut être réalisé par d'autres processus thermiques.

En effet, au lieu de porter le mélange à une seule température, on pourra par exemple porter le mélange à une pluralité de températures, tout en appliquant le deuxième traitement consistant par exemple en une irradiation UV du mélange. La réaction a ainsi lieu pour une pluralité de températures $T_1, T_2, ....T_n$ correspondant à des pas $p_1, p_2, ....p_n$. A chaque pas $p_i$ correspond son homologue possédant une hélice inverse, c'est-à-dire une hélice ayant la même valeur absolue de pas mais un sens inverse. Ce processus particulier sera notamment préféré dans le cas où le mélange comprend une très forte concentration en deuxième cristal liquide (B), de l'ordre de 80 à 100% typiquement. En effet, dans ce cas, le matériau à cristaux liquides final sera solide et c'est donc le traitement thermique à une pluralité de températures qui permet à la structure finale d'avoir des hélices dans les deux sens.

Le premier traitement permettant un changement du sens de l'hélice consistant en un traitement thermique discontinu peut aussi être remplacé par un traitement thermique continu tel que l'application d'une rampe thermique. Dans ce cas, la formation d'un réseau de polymère a lieu pendant que la structure en hélice du mélange change progressivement de sens. Le matériau à cristaux liquides ainsi créé comprend une mémoire de ces modifications progressives du sens de l'hélice.

Une autre variante de ce mode d'élaboration consiste à faire changer le sens de l'hélice par irradiation UV plutôt que par traitement thermique.

Dans ce cas, le premier cristal liquide (A) du mélange de départ comprend des quatrièmes molécules de cristal liquide (A4) de façon à ce que le sens de l'hélice change en fonction d'un rayonnement UV.

On pourra prendre les quatrièmes molécules de cristal liquide (A4) parmi la liste des composés suivante :

- série des 3-(R)-methyl-6-arylidenecyclohexanone, (+)-isomenthone derivatives (Krivoshey et al., Proc. SPIE, 5257, 13, 2003; Krivoshey et al., Funct. Mat., 11, 1,76-81,2004);
- famille des azobenzènes dont (R)-3-1-(1-methylhexyloxy)-3'-octyloxy-2,2'-dimethylazobenzene (Ruslim et al., J. Mater. Chem., 12,3377-3379,2002);
- 3,3'-disubstituted azobenzenes (Ruslim et al., J. Mater. Chem., 9, 673-681, 1999).

L'irradiation UV correspondante a lieu à une longueur d'onde comprise entre 285 et 410 nm, avec un temps d'exposition pouvant varier entre quelques secondes et quelques dizaines de minutes (entre 1 seconde et 3600 secondes) ; ce temps d'exposition sera de préférence compris entre 60 et 600 secondes.

Selon encore une autre variante de l'invention, le premier traitement consistant à faire changer le sens de l'hélice de la structure du mélange réside dans l'application d'un champ électrique ou d'un champ magnétique.

Dans un autre mode de réalisation particulier de l'invention, on traite le mélange initial de façon à ce que l'hélice définissant la structure du mélange change non seulement de sens mais aussi de pas p: En effet, comme il a été rappelé plus haut, un cristal liquide présentant une structure en hélice réfléchit sélectivement la lumière avec une longueur d'onde qui dépend notamment du pas p de l'hélice.

Le traitement permettant de modifier le pas p de l'hélice étant effectué en tout ou en partie simultanément au deuxième traitement visant à former un réseau de polymère, le matériau à cristaux liquides formé possède une mémoire du changement de pas de l'hélice.

De ce fait, le matériau à cristaux liquides résultant présente une bande de longueur d'onde de réflexion élargie. L'élargissement de la bande de réflexion obtenue dépend de l'amplitude de la variation du pas en fonction du paramètre de contrôle de la réaction ; plus cette amplitude est grande et plus la bande de réflexion est élargie.

Selon un première variante, le pas de l'hélice du mélange change en conséquence du traitement thermique appliqué au mélange comme premier traitement pour modifier le sens de l'hélice.

Ainsi, dans le cas d'un traitement thermique discontinu selon une pluralité de températures, ou dans le cas d'un traitement thermique continu selon une rampe de température, l'hélice définissant la structure du mélange change non seulement de sens mais change aussi de pas au cours du traitement thermique. Ainsi, le matériau à cristaux liquides créé comprend une mémoire des modifications progressives de l'hélice, tant au niveau de son sens que, comme une conséquence indirecte, de son pas.

Une autre façon de modifier le pas de l'hélice du mélange tout en modifiant son sens consiste à appliquer un troisième traitement au moins en partie simultanément avec le premier et le deuxième traitement consistant respectivement à modifier le sens de l'hélice et à former un réseau de polymère..

Dans ce cas, il est possible de changer le pas de l'hélice par l'application d'un champ électrique. On pourra par exemple appliquer un champ électrique de fréquence 1 kHz, et variant entre 0,5 et 20 V/$\mu$m.

Il est également possible pour faire varier le pas de l'hélice d'appliquer un champ magnétique variant par exemple de 2 à 15 kG (de 0,2 à 1,5 T).

Une autre solution visant au changement du pas de l'hélice consiste à appliquer une pression mécanique sur la cellule capacitive.

Enfin, le changement de pas de l'hélice définissant la structure du mélange peut être réalisé par modification de la conformation moléculaire de la structure induite par un rayonnement électromagnétique, ce rayonnement électromagnétique pouvant être un rayonnement visible ou UV. Pour ce faire, le premier cristal liquide (A) du mélange comprend des cinquièmes molécules de cristal liquide (A5) qui représentent entre 0,1 et 10% du mélange, ces cinquièmes molécules (A5) étant choisies parmi les composés suivants :

- famille des azobenzenes ou azoxybenzenes (Kurihara et al., Chem. Mater., 13, 1992, 2001; Kusumoto et al., Mol. Cryst. Liq. Cryst., 14, 727, 1993; Negishi et al., Chem. Lett., 319, 1996 et 583, 1996; Bobrovsky et al., Adv. Mater., 12, 1180-3, 2000; Kitaeva et al., Mol. Cryst. Liq. Cryst., 2, 261-279, 1992) dont 4,4'-dialkylazobenzenes (Moriyama et al., J. Mater. Chem., 11, 1003-1010, 2001) ;
- famille des fulgides (Yokoyama et al., Chem. Lett.,

687, 1997) dont indole fulgide (Janicki et al., J. Am. Chem. Soc., 117, 8524, 1995), bisnaphthol-based chiral fulgide derivatives (Yokoyama et al., Chem. Lett., 687, 1997) ;

- famille des diarylethenes (Uchida et al., Chem. Lett., 654, 2000 ; Yamaguchi et al., Chem. Mater., 12, 869, 2000) dont diarylethylene-bis imine (Denekamp et al., Adv. Mater., 10, 1081, 1998) ;
- famille des alcènes surencombrés (Feringa et al., J. Am. Chem. Soc., 117, 9929, 1995 ; Huck et al., Science, 273, 1686, 1996).

Dans ce cas, il se produira par exemple une photo-isomérisation trans-cis ou une photo-cyclisation sous l'effet d'un rayonnement UV de longueur d'onde comprise entre 250 et 365 nm.

Le changement inverse se produira sous l'action d'un rayonnement visible de longueur d'onde supérieur ou égal à 435 nm.

Les irradiations électromagnétiques seront appliquées avec des rayonnements ayant une énergie comprise typiquement entre 1 et 100 mJ/cm$^2$ et des temps d'irradiation pouvant varier entre quelques secondes et quelques dizaines de minutes (entre 1 et 3600 secondes), typiquement de l'ordre de quelques minutes (c'est-à-dire entre 60 et 600 secondes).

Le matériau à cristaux liquides résultant de la formation d'un réseau de polymère simultanément à des modifications du sens et du pas de l'hélice définissant la structure du mélange initial, permet non seulement de réfléchir plus de 50% d'une lumière incidente non polarisée, mais permet également de réfléchir la lumière sur une bande de longueurs d'onde élargie, typiquement de l'ordre de quelques centaines de nanomètres (entre 100 et 500 nanomètres) dans le spectre visible.

Enfin, lorsque le matériau comprend moins de 5% de réseau polymère, la propriété de réflexion de la lumière peut être modifiée par application d'un champ électrique alternatif avec une fréquence typiquement de l'ordre de 1 kHz. Ce sera le cas par exemple lorsque le cristal liquide photoréactif (B) du mélange est dans une concentration minoritaire, typiquement inférieure à 5%.

Dans ce cas, le matériau à cristaux liquides est adressable. La cellule optique passe progressivement d'un état réflecteur à un état diffusif (typiquement à partir de 1 V/$\mu$m) puis transparent (typiquement à partir de 10 V/$\mu$m).

## Revendications

1. Procédé d'élaboration d'un matériau à cristaux liquides, **caractérisé en ce qu'**il comprend les étapes consistant à :

  - Appliquer un premier traitement à un mélange de cristaux liquides ayant une structure en hélice comprenant un premier cristal liquide (A) non-photoréactif et un deuxième cristal liquide (B) photoréactif, le premier traitement modifiant un sens de l'hélice du mélange ;
  - Appliquer un deuxième traitement au mélange de façon à ce que le deuxième cristal (B) liquide forme un réseau de polymère, le deuxième traitement étant effectué pendant tout ou partie de la durée du premier traitement, la formation du réseau de polymère pendant tout ou partie de la durée du premier traitement permettant au matériau à cristaux liquides de conserver une mémoire des modifications de l'hélice et de présenter dans tout son volume une structure en hélices à la fois droite et gauche.

2. Procédé selon la revendication 1, **caractérisé en ce que** le mélange présente un polymorphisme comprenant au moins une phase cholestérique et/ou smectique C chirale.

3. Procédé selon l'une quelconque des revendications 1 ou 2, **caractérisé en ce que** le premier cristal liquide (A) comprend des premières molécules de cristal liquide (A1) chirales.

4. Procédé selon la revendication 3, **caractérisé en ce que** le premier cristal liquide (A) comprend en outre des deuxièmes molécules de cristal liquide (A2) de manière à ce que la phase cholestérique et/ou smectique C chirale du mélange présente une inversion du sens de l'hélice de part et d'autre d'une température critique ($T_C$).

5. Procédé selon l'une quelconque des revendications 2 à 4, **caractérisé en ce que** le premier cristal liquide (A) est à anisotropie diélectrique positive.

6. Procédé selon l'une quelconque des revendications 2 à 4, **caractérisé en ce que** le premier cristal liquide (A) comprend en outre des troisièmes molécules de cristal liquide (A3) pour qu'il soit apte à changer de signe d'anisotropie diélectrique en fonction de la fréquence.

7. Procédé selon l'une quelconque des revendications 1 à 6, **caractérisé en ce que** le deuxième cristal liquide (B) est dans une concentration inférieure ou égale à 5% du mélange.

8. Procédé selon l'une quelconque des revendications 1 à 6, **caractérisé en ce que** le deuxième cristal liquide (B) est dans une concentration supérieure à 50% du mélange.

9. Procédé selon la revendication 8, **caractérisé en ce que** le deuxième cristal liquide (B) est dans une concentration supérieure à 80% du mélange

**10.** Procédé selon l'une quelconque des revendications précédentes, **caractérisé en ce que** le deuxième cristal liquide (B) est apte à être activé par irradiation UV.

**11.** Procédé selon l'une quelconque des revendications précédentes, **caractérisé en ce que** le mélange comprend en outre un agent photo-initiateur (C) pour favoriser la formation du réseau de polymère sous irradiation UV.

**12.** Procédé selon l'une quelconque des revendications précédentes, **caractérisé en ce que** le mélange comprend en outre un agent dispersant (D) pour favoriser une dispersion des composants du mélange et modifier une dynamique du matériau à cristaux liquides lors d'un adressage électrique.

**13.** Procédé selon l'une quelconque des revendications précédentes, **caractérisé en ce que** le mélange comprend en outre un inhibiteur de polymérisation thermique (E).

**14.** Procédé selon l'une quelconque des revendications précédentes, **caractérisé en ce que** le mélange comprend en outre un agent absorbant (F) apte à absorber le rayonnement UV de façon à ce que le matériau à cristaux liquides ait un gradient de structure et/ou de fonction.

**15.** Procédé selon l'une quelconque des revendications précédentes, **caractérisé en ce que** le deuxième traitement est une irradiation UV apte à polymériser le mélange.

**16.** Procédé selon la revendication 15, **caractérisé en ce que** l'irradiation UV est effectuée avec un rayonnement UV ayant une longueur d'onde de 365 nm et une puissance de 0,1 mW/cm$^2$ pendant un temps d'exposition compris entre 30 et 60 minutes.

**17.** Procédé selon l'une quelconque des revendications 15 ou 16, **caractérisé en ce que** le deuxième traitement permet une réticulation du mélange.

**18.** Procédé selon l'une quelconque des revendications 15 ou 16, **caractérisé en ce que** le deuxième traitement permet une gélification du mélange.

**19.** Procédé selon l'une quelconque des revendications 1 à 14, **caractérisé en ce que** le deuxième traitement est une trempe apte à vitrifier le mélange.

**20.** Procédé selon l'une quelconque des revendications 4 à 19, **caractérisé en ce que** le premier traitement est un traitement thermique.

**21.** Procédé selon la revendication 20, **caractérisé en**

**ce que** le traitement thermique est continu et consiste à appliquer une rampe de température au mélange.

**22.** Procédé selon la revendication 20, **caractérisé en ce que** le traitement thermique est discontinu et consiste à porter le mélange à une température de traitement différente de la température critique ($T_C$), la température de traitement étant supérieure à la température critique ($T_C$) lorsque une température de fonctionnement du matériau à cristaux liquides est inférieure à la température critique ($T_C$), et inversement.

**23.** Procédé selon la revendication 20, **caractérisé en ce que** le traitement thermique est discontinu et consiste à porter le mélange à une pluralité de températures de part et d'autre de la température critique ($T_C$).

**24.** Procédé selon l'une quelconque des revendications 1 à 19, **caractérisé en ce que** le premier traitement est une irradiation UV.

**25.** Procédé selon la revendication 24, **caractérisé en ce que** le premier crystal liquide (A) comprend en outre des quatrièmes molécules de cristal liquide (A4) permettant une inversion du sens de l'hélice de la phase cholestérique et/ou smectique C chirale en fonction de l'irradiation UV.

**26.** Procédé selon l'une quelconque des revendications 24 ou 25, **caractérisé en ce que** l'irradiation UV est effectuée avec un rayonnement UV ayant une longueur d'onde comprise entre 285 et 410 nm et une puissance de 0,1 mW/cm$^2$, pendant un temps d'exposition compris entre 1 et 3600 secondes.

**27.** Procédé selon la revendication 26, **caractérisé en ce que** l'irradiation UV est effectuée pendant un temps d'exposition compris entre 60 et 600 secondes.

**28.** Procédé selon l'une quelconque des revendications 1 à 19, **caractérisé en ce que** le premier traitement consiste à appliquer un champ électrique.

**29.** Procédé selon l'une quelconque des revendications 1 à 19, **caractérisé en ce que** le premier traitement consiste à appliquer un champ magnétique.

**30.** Procédé selon l'une quelconque des revendications précédentes, **caractérisé en ce qu'**il comprend en outre une étape consistant à appliquer au mélange un troisième traitement modifiant un pas de l'hélice du mélange.

**31.** Procédé selon la revendication 30, **caractérisé en**

**ce que** le deuxième traitement est effectué pendant tout ou partie de la durée du troisième traitement.

32. Procédé selon l'une quelconque des revendications 30 ou 31, **caractérisé en ce que** le troisième traitement consiste à appliquer un champ électrique au mélange.

33. Procédé selon la revendication 32, **caractérisé en ce que** le champ électrique a une fréquence de 1 kHz et varie de 0,5 à 20 V/$\mu$m.

34. Procédé selon l'une quelconque des revendications 30 ou 31, **caractérisé en ce que** le troisième traitement consiste à appliquer un champ magnétique au mélange.

35. Procédé selon la revendication 34, **caractérisé en ce que** le champ magnétique varie de 2 à 15 kG.

36. Procédé selon l'une quelconque des revendications 30 ou 31, **caractérisé en ce que** le troisième traitement consiste à appliquer une pression mécanique sur le mélange.

37. Procédé selon l'une quelconque des revendications 30 ou 31, **caractérisé en ce que** le troisième traitement est une irradiation électromagnétique, et le premier cristal liquide comprend en outre des cinquièmes molécules (A5) de cristal liquide afin que le troisième traitement modifie la conformation moléculaire du mélange.

38. Procédé selon la revendication 37, **caractérisé en ce que** l'irradiation électromagnétique est effectuée par un rayonnement UV ayant une longueur d'onde comprise entre 250 et 365 nm, une énergie comprise entre 1 et 100 mJ/cm$^2$, et pendant un temps d'exposition compris entre 1 et 3600 secondes.

39. Procédé selon la revendication 38, **caractérisé en ce que** le temps d'exposition est compris entre 60 et 600 secondes.

40. Procédé selon la revendication 37, **caractérisé en ce que** l'irradiation électromagnétique est effectuée par un rayonnement visible ayant une longueur d'onde supérieure à 435 nm, une énergie comprise entre 1 et 100 mJ/cm$^2$, et pendant un temps d'exposition compris entre 1 et 3600 secondes.

41. Procédé selon la revendication 40, **caractérisé en ce que** le temps d'exposition est compris entre 60 et 600 secondes.

42. Procédé selon l'une quelconque des revendications précédentes, **caractérisé en ce que**, avant d'appliquer l'un quelconque des traitements, le mélange est introduit dans une cellule capacitive comprenant deux substrats (1) recouverts d'un film conducteur (2).

43. Dispositif à cristaux liquides comprenant un substrat (1) sur lequel est disposé un matériau à cristaux liquides (4) constitué par au moins un cristal liquide présentant une structure en hélice, **caractérisé en ce que** le matériau présente dans tout son volume une structure en hélices à la fois droite et gauche, la structure en hélice à la fois droite et gauche dans tout le volume permettant au dispositif d'avoir un taux de réflexion supérieur à 50%.

44. Dispositif à cristaux liquides selon la revendication 43, **caractérisé en ce qu'**il comprend des propriétés optiques aptes à être commandées par application d'une tension électrique.

45. Dispositif à cristaux liquides selon l'une quelconque des revendications 43 ou 44, **caractérisé en ce qu'**il comprend en outre un autre substrat recouvrant le matériau à cristaux liquides, de façon à former une cellule capacitive.

**Claims**

1. A method for producing a liquid crystal material, **characterised in that** it comprises the following steps consisting of:

- applying a first treatment to a liquid crystal mixture having a helical structure comprising a first non-photoreactive liquid crystal (A) and a second photoreactive liquid crystal (B), said first treatment modifying a direction of the helix of the mixture;
- applying a second treatment to the mixture such that the second liquid crystal (B) forms a polymer network, the second treatment being performed during all or part of the duration of the first treatment such that the liquid crystal material retains a memory of the modifications of the helix and has in its entire volume both a right-handed and left-handed helical structure.

2. The method according to claim 1, **characterised in that** the mixture presents a polymorphism comprising at least one cholesteric phase and / or a smectic C chiral phase.

3. The method according to any one of claims 1 or 2, **characterised in that** the first liquid crystal (A) comprises first molecules of chiral liquid crystal (A1).

4. The method according to claim 3, **characterised in that** the first liquid crystal (A) further comprises second molecules of liquid crystal (A2) such that the cholesteric phase and / or the smectic C chiral phase of the mixture presents an inversion of the direction of the helix on either side of a critical temperature $(T_C)$.

5. The method according to any one of claims 2 to 4, **characterised in that** the first liquid crystal (A) has a positive dielectric anisotropy.

6. The method according to any one of claims 2 to 4, **characterised in that** the first liquid crystal (A) further comprises third liquid crystal molecules (A3) so that it is adapted for changing the sign of dielectric anisotropy as a function of the frequency.

7. The method according to any one of claims 1 to 6, **characterised in that** the second liquid crystal (B) is in a concentration of less than or equal to 5% of the mixture.

8. The method according to any one of claims 1 to 6, **characterised in that** the second liquid crystal (B) is in a concentration greater than 50% of the mixture.

9. The method according to claim 8, **characterised in that** the second liquid crystal (B) is in a concentration greater than 80% of the mixture.

10. The method according to any one of the preceding claims, **characterised in that** the second liquid crystal (B) is adapted to be activated by UV irradiation.

11. The method according to any one of the preceding claims, **characterised in that** the mixture further comprises a photoinitiator agent (C) to enhance development of the polymer network under UV irradiation.

12. The method according to any one of the preceding claims, **characterised in that** the mixture further comprises a dispersal agent (D) to enhance dispersion of the components of the mixture and modify a dynamic of the liquid crystal material during electrical addressing.

13. The method according to any one of the preceding claims, **characterised in that** the mixture further comprises a thermal polymerisation inhibitor (E).

14. The method according to any one of the preceding claims, **characterised in that** the mixture further comprises an absorbing agent (F) adapted for absorbing UV radiation so that the liquid crystal material has a structure and / or function gradient.

15. The method according to any one of the preceding claims, **characterised in that** the second treatment is UV irradiation suitable for polymerising the mixture.

16. The method according to claim 15, **characterised in that** UV irradiation is performed with UV radiation having a wavelength of the order of 365nm and a power of 0.1 mW/cm$^2$, for an exposure time of between 30 and 60 minutes.

17. The method according to any one of claims 15 or 16, **characterised in that** the second treatment enables cross-linking of the mixture.

18. The method according to any one of claims 15 or 16, **characterised in that** the second treatment enables gelling of the mixture.

19. The method according to any one of claims 1 to 14, **characterised in that** the second treatment is a quenching adapted to vitrify the mixture.

20. The method according to any one of claims 4 to 19, **characterised in that** the first treatment is a thermal treatment.

21. The method according to claim 20, **characterised in that** the thermal treatment is continuous and consists of applying a temperature ramp to the mixture.

22. The method according to claim 20, **characterised in that** the thermal treatment is discontinuous and consists of bringing the mixture to a treatment temperature different than the critical temperature $(T_C)$, the treatment temperature being greater than the critical temperature $(T_C)$ when an operating temperature of the liquid crystal material is less than the critical temperature $(T_C)$, and inversely.

23. The method according to claim 20, **characterised in that** the thermal treatment is discontinuous and consists of bringing the mixture to a plurality of temperatures on either side of the critical temperature $(T_C)$.

24. The method according to any one of claims 1 to 19, **characterised in that** the first treatment is UV irradiation.

25. The method according to claim 24, **characterised in that** the first liquid crystal (A) further comprises fourth molecules of liquid crystal (A4) to enable inversion of the direction of the helix of the cholesteric phase and / or the smectic C chiral phase as a function of UV irradiation.

26. The method according to any one of claims 24 or 25, **characterised in that** UV irradiation is performed with UV radiation having a wavelength of between 285 and 410nm and a power of 0.1mW/cm$^2$, for an exposure time of between 1 and 3600 seconds.

27. The method according to claim 26, **characterised in that** UV irradiation is performed for an exposure time of between 60 and 600 seconds.

28. The method according to any one of claims 1 to 19, **characterised in that** the first treatment consists of applying an electric field.

29. The method according to any one of claims 1 to 19, **characterised in that** the first treatment consists of applying a magnetic field.

30. The method according to any one of the preceding claims, **characterised in that** it further comprises a step consisting of applying to the mixture a third treatment modifying a pitch of the helix of the mixture.

31. The method according to claim 30, **characterised in that** the second treatment is performed during all or part of the third treatment.

32. The method according to any one of claims 30 or 31, **characterised in that** the third treatment consists of applying an electric field to the mixture.

33. The method according to claim 32, **characterised in that** the electric field has a frequency of 1kHz and varies from 0.5 to 20V/$\mu$m.

34. The method according to any one of claims 30 or 31, **characterised in that** the third treatment consists of applying a magnetic field to the mixture.

35. The method according to claim 34, **characterised in that** the magnetic field varies from 2 to 15kG.

36. The method according to any one of claims 30 or 31, **characterised in that** the third treatment consists of applying mechanical pressure to the mixture.

37. The method according to any one of claims 30 or 31, **characterised in that** the third treatment is electromagnetic irradiation, and the first liquid crystal further comprises fifth molecules (A5) of liquid crystal such that the third treatment modifies the molecular structuring of the mixture.

38. The method according to claim 37, **characterised in that** the electromagnetic irradiation is performed by UV radiation having a wavelength of between 250 and 365nm, energy of between 1 and 100mJ/cm$^2$, and for an exposure time of between 1 and 3600 seconds.

39. The method according to claim 38, **characterised in that** the exposure time is between 60 and 600 seconds.

40. The method according to claim 37, **characterised in that** the electromagnetic irradiation is performed by visible radiation having a wavelength greater than 435nm, energy of between 1 and 100mJ/cm$^2$, and for an exposure time of between 1 and 3600 seconds.

41. The method according to claim 40, **characterised in that** the exposure time is between 60 and 600 seconds.

42. The method according to any one of the preceding claims, **characterised in that**, before any one of the treatments is applied, the mixture is introduced into a capacitive cell comprising two substrates (1) covered by a conductive film (2).

43. A crystal liquid device comprising a substrate (1) on which is placed a liquid crystal material (4) comprising at least one liquid crystal having a helical structure, **characterised in that** the entire volume of the material has both a right-handed and left-handed helical structure, such that the device has a reflection rate of more than 50%.

44. The crystal liquid device of claim 43, **characterised in that** it comprises optical properties adapted to be controlled by application of an electric voltage.

45. The crystal liquid device of any of claims 43 or 44, **characterised in that** it further comprises another substrate covering the liquid crystal material so as to form a capacitive cell.

**Patentansprüche**

1. Verfahren zur Herstellung eines Flüssigkeitskristallmaterials, **dadurch gekennzeichnet, dass** es die Schritte umfasst, die bestehen in:

    - der Anwendung einer ersten Behandlung eines Flüssigkeitskristallgemischs mit einer Helixstruktur, das ein erstes, nicht photoreaktives Flüssigkeitskristall (A) und ein zweites photoreaktives Flüssigkeitskristall (B) umfasst, wobei die erste Behandlung eine Richtung der Helix des Gemischs verändert,
    - der Anwendung einer zweiten Behandlung des Gemischs, so dass das zweite Flüssigkeitskristall (B) ein Polymernetz bildet, wobei die zweite Behandlung während der gesamten oder eines Teils der Dauer der ersten Behandlung durchgeführt wird, wobei die Bildung des Polymernetzes während der gesamten oder einem Teil der Dauer der ersten Behandlung dem Flüssigkeitskristallmaterial erlaubt, eine Erinnerung an die Änderungen der Helix zu behalten und in seinem gesamten Volumen eine sowohl rechte und linke Helixstruktur aufzuweisen.

2. Verfahren nach Anspruch 1, **dadurch gekennzeichnet, dass** das Gemisch einen Polymorphismus aufweist, der mindestens eine cholesterinische und / oder smektische C-chirale Phase umfasst.

3. Verfahren nach einem der Ansprüche 1 oder 2, **dadurch gekennzeichnet, dass** das erste Flüssigkeitskristall (A) erste chirale Flüssigkeitskristallmoleküle (A1) umfasst.

4. Verfahren nach Anspruch 3, **dadurch gekennzeichnet, dass** das erste Flüssigkeitskristall (A) weiterhin zweite Flüssigkeitskristallmoleküle (A2) umfasst, so dass die erste cholesterinische und / oder smektische C-chirale Phase des Gemischs eine Umkehrung der Richtung der Helix beiderseits einer kritischen Temperatur ($T_c$) aufweist.

5. Verfahren nach einem der Ansprüche 2 bis 4, **dadurch gekennzeichnet, dass** das erste Flüssigkeitskristall (A) positiv dielektrisch anisotrop ist.

6. Verfahren nach einem der Ansprüche 2 bis 4, **dadurch gekennzeichnet, dass** das erste Flüssigkeitskristall (A) weiterhin dritte Flüssigkeitskristallmoleküle (A3) umfasst, damit es imstande ist, das dielektrische Anisotropie-Vorzeichen in Abhängigkeit von der Frequenz zu ändern.

7. Verfahren nach einem der Ansprüche 1 bis 6, **dadurch gekennzeichnet, dass** das zweite Flüssigkeitskristall (B) in einer Konzentration kleiner oder gleich 5 % des Gemischs ist.

8. Verfahren nach einem der Ansprüche 1 bis 6, **dadurch gekennzeichnet, dass** das zweite Flüssigkeitskristall (B) in einer Konzentration über 50 % des Gemischs ist.

9. Verfahren nach Anspruch 8, **dadurch gekennzeichnet, dass** das zweite Flüssigkeitskristall (B) in einer Konzentration über 80 % des Gemischs ist.

10. Verfahren nach einem der vorangehenden Ansprüche, **dadurch gekennzeichnet, dass** das zweite Flüssigkeitskristall (B) durch UV-Bestrahlung aktivierbar ist.

11. Verfahren nach einem der vorangehenden Ansprüche, **dadurch gekennzeichnet, dass** das Gemisch weiterhin einen Photoinitiator (C) umfasst, um die Bildung des Polymernetzes unter UV-Bestrahlung zu fördern.

12. Verfahren nach einem der vorangehenden Ansprüche, **dadurch gekennzeichnet, dass** das Gemisch weiterhin ein Dispergiermittel (D) umfasst, um eine Dispersion der Bestandteile des Gemischs zu fördern und um eine Dynamik des Flüssigkeitskristallmaterials bei einer elektrischen Ansteuerung zu verändern.

13. Verfahren nach einem der vorangehenden Ansprüche, **dadurch gekennzeichnet, dass** das Gemisch weiterhin einen Inhibitor der thermischen Polymerisation (E) umfasst.

14. Verfahren nach einem der vorangehenden Ansprüche, **dadurch gekennzeichnet, dass** das Gemisch weiterhin ein Absorptionsmittel (F) umfasst, das imstande ist, die UV-Strahlung derart zu absorbieren, dass das Flüssigkeitskristallmaterial einen Struktur- und / oder Funktionsgradienten hat.

15. Verfahren nach einem der vorangehenden Ansprüche, **dadurch gekennzeichnet, dass** die zweite Behandlung eine UV-Bestrahlung ist, die imstande ist, das Gemisch zu polymerisieren.

16. Verfahren nach Anspruch 15, **dadurch gekennzeichnet, dass** die UV-Bestrahlung mit einer UV-Strahlung durchgeführt wird, die eine Wellenlänge von 365 nm und eine Leistung von 0,1 mW/cm$^2$ während einer Expositionszeit zwischen 30 und 60 Minuten inklusive hat.

17. Verfahren nach einem der Ansprüche 15 oder 16, **dadurch gekennzeichnet, dass** die zweite Behandlung eine Retikulierung des Gemischs erlaubt.

18. Verfahren nach einem der Ansprüche 15 oder 16, **dadurch gekennzeichnet, dass** die zweite Behandlung eine Gelbildung des Gemischs erlaubt.

19. Verfahren nach einem der Ansprüche 1 bis 14, **dadurch gekennzeichnet, dass** die zweite Behandlung ein Vergüten ist, das imstande ist, das Gemisch zu Verglasen.

20. Verfahren nach einem der Ansprüche 4 bis 19, **dadurch gekennzeichnet, dass** die erste Behandlung eine thermische Behandlung ist.

21. Verfahren nach Anspruch 20, **dadurch gekennzeichnet, dass** die thermische Behandlung kontinuierlich ist und darin besteht, auf das Gemisch eine Temperaturrampe anzuwenden.

22. Verfahren nach Anspruch 20, **dadurch gekennzeichnet, dass** die thermische Behandlung diskontinuierlich ist und darin besteht, das Gemisch auf eine Behandlungstemperatur zu bringen, die sich von der kritischen Temperatur ($T_c$) unterscheidet, wobei die Behandlungstemperatur höher ist als die kritische Temperatur ($T_c$), wenn eine Funktionstemperatur des Flüssigkeitskristallmaterials kleiner als die kritische Temperatur ($T_c$) ist und umgekehrt.

**23.** Verfahren nach Anspruch 20, **dadurch gekennzeichnet, dass** die Temperaturbehandlung diskontinuierlich ist und darin besteht, das Gemisch auf eine Vielzahl von Temperaturen beiderseits der kritischen Temperatur ($T_c$) zu bringen.

**24.** Verfahren nach einem der Ansprüche 1 bis 19, **dadurch gekennzeichnet, dass** die erste Behandlung eine UV-Bestrahlung ist.

**25.** Verfahren nach Anspruch 24, **dadurch gekennzeichnet, dass** das erste Flüssigkeitskristall (A) weiterhin vierte Flüssigkeitskristallmoleküle (A4) umfasst, die eine Umkehrung der Richtung der Helix der cholesterinischen und / oder smektischen C-chiralen Phase in Abhängigkeit von der UV-Bestrahlung erlaubt.

**26.** Verfahren nach einem der Ansprüche 24 oder 25, **dadurch gekennzeichnet, dass** die UV-Bestrahlung mit einer UV-Strahlung durchgeführt wird, die eine Wellenlänge zwischen 285 und 410 nm inklusive und eine Leistung von 0,1 mW/cm$^2$ hat, während einer Expositionszeit zwischen 1 und 3600 Sekunden inklusive.

**27.** Verfahren nach Anspruch 26, **dadurch gekennzeichnet, dass** die UV-Bestrahlung während einer Expositionszeit zwischen 60 und 600 Sekunden inklusive durchgeführt wird.

**28.** Verfahren nach einem der Ansprüche 1 bis 19, **dadurch gekennzeichnet, dass** die zweite Behandlung in der Anwendung eines elektrischen Feldes besteht.

**29.** Verfahren nach einem der Ansprüche 1 bis 19, **dadurch gekennzeichnet, dass** die erste Behandlung in der Anwendung eines Magnetfeldes besteht.

**30.** Verfahren nach einem der vorangehenden Ansprüche, **dadurch gekennzeichnet, dass** es weiterhin einen Schritt umfasst, der darin besteht, das Gemisch einer dritten Behandlung zu unterziehen, die eine Steigung der Helix des Gemischs verändert.

**31.** Verfahren nach Anspruch 30, **dadurch gekennzeichnet, dass** die zweite Behandlung während der gesamten oder einem Teil der Dauer der dritten Behandlung durchgeführt wird.

**32.** Verfahren nach einem der Ansprüche 30 oder 31, **dadurch gekennzeichnet, dass** die dritte Behandlung in der Anwendung eines elektrischen Feldes auf das Gemisch besteht.

**33.** Verfahren nach Anspruch 32, **dadurch gekennzeichnet, dass** das elektrische Feld eine Frequenz von 1 kHz hat und von 0,5 bis 20 V/μm schwankt.

**34.** Verfahren nach einem der Ansprüche 30 oder 31, **dadurch gekennzeichnet, dass** die dritte Behandlung in der Anwendung eines Magnetfeldes auf das Gemisch besteht.

**35.** Verfahren nach Anspruch 34, **dadurch gekennzeichnet, dass** das Magnetfeld von 2 bis 15 kG schwankt.

**36.** Verfahren nach einem der Ansprüche 30 oder 31, **dadurch gekennzeichnet, dass** die dritte Behandlung in der Anwendung mechanischen Drucks auf das Gemisch besteht.

**37.** Verfahren nach einem der Ansprüche 30 oder 31, **dadurch gekennzeichnet, dass** die dritte Behandlung eine elektromagnetische Bestrahlung ist, und das erste Flüssigkeitskristall umfasst weiterhin fünfte Flüssigkeitskristallmoleküle (A5), damit die dritte Behandlung die molekulare Konformation des Gemischs verändert.

**38.** Verfahren nach Anspruch 37, **dadurch gekennzeichnet, dass** die elektromagnetische Bestrahlung durch eine UV-Strahlung durchgeführt wird, die eine Wellenlänge zwischen 250 und 365 nm inklusive hat, eine Energie zwischen 1 und 100 mJ/cm$^3$ inklusive und während einer Expositionszeit zwischen 1 und 3600 Sekunden inklusive.

**39.** Verfahren nach Anspruch 38, **dadurch gekennzeichnet, dass** die Expositionszeit zwischen 60 und 600 Sekunden inklusive ist.

**40.** Verfahren nach Anspruch 37, **dadurch gekennzeichnet, dass** die elektromagnetische Bestrahlung durch eine sichtbare Strahlung mit einer Wellenlänge über 435 nm, einer Energie zwischen 1 und 100 mJ/cm$^2$ inklusive und während einer Expositionszeit zwischen 1 und 3600 Sekunden inklusive durchgeführt wird.

**41.** Verfahren nach Anspruch 40, **dadurch gekennzeichnet, dass** die Expositionszeit zwischen 60 und 600 Sekunden inklusive ist.

**42.** Verfahren nach einem der vorangehenden Ansprüche, **dadurch gekennzeichnet, dass** das Gemisch vor Anwendung irgendeiner der Behandlungen in eine kapazitive Zelle eingeführt wird, die zwei mit einer leitenden Folie (2) abgedeckte Substrate (1) umfasst.

**43.** Flüssigkeitskristallvorrichtung, ein Substrat (1) umfassend, auf dem ein Flüssigkeitskristallmaterial (4) angeordnet ist, das von mindestens einem Flüssigkeitskristall gebildet wird, das eine Helixstruktur aufweist, **dadurch gekennzeichnet, dass** das Material in seinem gesamten Volumen eine sowohl rechte und linke Helixstruktur aufweist, wobei die sowohl rechte und linke Helixstruktur in dem gesamten Volumen der Vorrichtung erlaubt, einen Reflexionsgrad von über 50 % zu haben.

**44.** Flüssigkeitskristallvorrichtung nach Anspruch 43, **dadurch gekennzeichnet, dass** sie optische Eigenschaften umfasst, die durch Anwendung einer elektrischen Spannung steuerbar sind.

**45.** Flüssigkeitskristallvorrichtung nach einem der Ansprüche 43 oder 44, **dadurch gekennzeichnet, dass** sie weiterhin ein anderes Substrat umfasst, das das Flüssigkeitskristallmaterial derart bedeckt, dass eine kapazitive Zelle gebildet wird.

**Figure 1**

**Figure 2**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 20040011994 A
- GB 2355720 A
- US 2003104144 A
- EP 0982605 A
- WO 9857223 A
- EP 1295929 A
- EP 0711780 B1
- US 005641850 A

### Littérature non-brevet citée dans la description

- **D.J. Broer ; J. Lub ; G.N. Mol.** *Nature,* 1995, vol. 378, 467
- **Heppke et al.** *Z. Naturforsch.,* 1987, vol. 42a, 279-283
- **Dierking et al.** *Z. Naturforsch.,* 1994, vol. 49a, 1081-1086
- **Dierking et al.** *Liq. Cryst.,* 1995, vol. 18, 443-449
- **Stegemeyer et al.** *Z. Naturforsch., A Phys. Sci.,* vol. 44, 1127
- **Slaney et al.** *J. Mater. Chem.,* 1992, vol. 2, 805
- **L.-C. Chien.** Recent Advances in Liquid Crystal Polymers. American Chemical Society Book Series, 1995
- **Krivoshey et al.** *Proc. SPIE,* 2003, vol. 5257, 13
- **Krivoshey et al.** *Funct. Mat.,* 2004, vol. 11, 1, 76-81
- **Ruslim et al.** *J. Mater. Chem.,* 2002, vol. 12, 3377-3379
- **Ruslim et al.** *J. Mater. Chem.,* vol. 9, 673-681
- **Kurihara et al.** *Chem. Mater.,* 2001, vol. 13, 1992
- **Kusumoto et al.** *Mol. Cryst. Liq. Cryst.,* 1993, vol. 14, 727
- **Negishi et al.** *Chem. Lett.,* 1996, 319
- *CHEM. LETT.,* 583
- **Bobrovsky et al.** *Adv. Mater.,* 2000, vol. 12, 1180-3
- **Kitaeva et al.** *Mol. Cryst. Liq. Cryst.,* 1992, vol. 2, 261-279
- **Moriyama et al.** *J. Mater. Chem.,* 2001, vol. 11, 1003-1010
- **Yokoyama et al.** *Chem. Lett.,* 1997, 687
- **Janicki et al.** *J. Am. Chem. Soc.,* 1995, vol. 117, 8524
- **Uchida et al.** *Chem. Lett.,* 2000, 654
- **Yamaguchi et al.** *Chem. Mater.,* 2000, vol. 12, 869
- **Denekamp et al.** *Adv. Mater.,* 1998, vol. 10, 1081
- **Feringa et al.** *J. Am. Chem. Soc.,* 1995, vol. 117, 9929
- **Huck et al.** *Science,* 1996, vol. 273, 1686